# EUROPEAN PATENT APPLICATION

(11) **EP 1 702 705 A1**
(43) Date of publication of application: **20.09.2006**
(21) Application number: 04807853.9
(22) Date of filing: 27.12.2004
(51) Int. Cl.: B23K 1/008

(54) **REFLOW FURNACE**

(30) Priority: 07.01.2004 JP 2004001523
(71) Applicant: SENJU METAL INDUSTRY CO., LTD., Tokyo, 120-8555 (JP)
(72) Inventor: NIKAIDO, Takayuki, 2891106 (JP); HIYAMA, Tsutomu, 1240006 (JP)
(74) Representative: Schrimpf, Robert
(86) International application number: PCT/JP2004/019498
(87) International publication number: WO 2005/065877

(57) **Abstract**

Problem

In a conventional reflow furnace equipped with a flux fumes removal apparatus, it was difficult to completely perform suction of flux fumes inside the reflow furnace, and when cleaned gas was returned to inside the reflow furnace, outside gas flowed into the furnace due to disruption of the gas in the furnace, and the oxygen concentration could not be stabilized.

Means for Solving the Problem

In a reflow furnace according to the present invention, a suction pipe is provided over the entire heating region along a rail on which a conveyor travels, suction ports are formed on the inner side of the suction pipe, and gas which is cleaned on the outside of the furnace is made to flow out through the entrance and exit, so it forms an air curtain at the entrance and exist, and outside air no longer flows in.

## Description

### Technical Field

This invention relates to a reflow furnace for soldering a printed circuit board and surface mounted devices to each other using a solder paste.

### Background Art

A solder paste used for soldering in a reflow furnace is a viscous soldering material comprising solder powder and a pasty flux. When soldering a printed circuit board and a surface mounted device (SMD) to each other using a solder paste, a metal mask having holes formed in the same locations as the portions to be soldered of the printed circuit board is placed atop the printed circuit board so that the holes and the portions to be soldered coincide, a solder paste is then placed atop the metal mask, and the solder paste is wiped with a squeegee to fill the holes in the metal mask with the solder paste. When the metal mask is then moved upwards from the printed circuit board, the solder paste is applied by printing to the portions to be soldered of the printed circuit board. Prescribed SMD's are then placed on the portions of the printed circuit board where the solder paste was applied, and the printed circuit board is then transported inside a reflow furnace by a conveyor of the reflow furnace and soldering is carried out.

A reflow furnace for carrying out soldering of printed circuit boards comprises a preheating zone, a main heating zone, and a cooling zone arranged in succession in the direction from the entrance to the exit. A conveyor travels along these zones. As a printed circuit board is being transported by the conveyor, it passes through the preheating zone, the main heating zone, and the cooling zone and soldering is carried out.

The preheating zone of a reflow furnace heats a printed circuit board to 100 - 150°C so as to evaporate solvents contained in the solder paste, it prevents sudden boiling of the solvent during high temperature heating in the next step in the main heating zone, it alleviates thermal shock to the printed circuit board and SMD's during high temperature heating, and it activates the flux to remove oxides and contaminants adhering to portions to be soldered and electrodes of the SMD and thereby cleans them.

In the main heating zone, the temperature reaches at least the melting point of the solder powder in the solder paste, so the solder powder in the solder paste applied to the printed circuit board is melted, and the portions to be soldered of the printed circuit board are soldered to the electrodes of the SMD's.

In the cooling zone, cold air is blown at a printed circuit board which was heated to a high temperature in the main heating zone, molten solder is solidified so that soldered portions will not be destroyed by vibrations or impacts, and the printed circuit board and the SMD's are rapidly cooled so as to eliminate the effects of residual heat.

An activator is an indispensable component of a flux of a solder paste. An activator has the effect of cleaning by reducing and removing oxides even when the portions to be soldered of a printed circuit board or electrodes of SMD's are oxidized when they are heated to a high temperature at the time of soldering. As the amount of an activator which is added increases, solderability is improved and defects are decreased. However, if soldering is carried out with a solder paste containing a large added amount of an activator, flux residue which adheres to soldered portions after soldering absorbs moisture and becomes an electrolyte, and it corrodes soldered portions and reduces insulation resistance. Therefore, printed circuit boards used in communications equipment, computers, and the like which require reliability have been cleaned to remove flux residue after soldering using a solder paste. Cleaning of flux residue has been carried out using a cleaning agent such as trichloroethylene, Freon (trademark), or alcohol, but these cleaning agents cause a breakdown of the ozone layer surrounding the earth and cause global warming, so use thereof is being regulated. Therefore, at present, a solder paste which does not require cleaning after soldering, i.e., a no-clean solder paste has come to be used. A no-clean solder paste contains only a small amount of an activator, and the amount of flux residue remaining after soldering is extremely small, so it does not cause problems such as corrosion or a decrease in insulation resistance even if cleaning is not carried out.

Since no-clean solder paste contains only a small amount of an activator, if soldering is carried out in an air reflow furnace in which oxygen is present, oxides on soldered portions which oxidize at the time of heating cannot be completely removed by reduction. Accordingly, a no-clean solder paste not only produces soldering defects, but it also cannot sufficiently reduce oxidized solder powder, and minute solder balls end up being formed. However, even with a no-clean solder paste, if soldering is carried out in a reflow furnace containing an inert atmosphere in which oxygen is not present, portions being soldered do not oxidize at the time of heating, so it is possible to carry out soldering without soldering defects or formation of minute solder balls. Accordingly, recently, in the electronics equipment industry, reflow furnaces using an inert atmosphere have come to be much used.

With an inert atmosphere reflow furnace, the lower the oxygen concentration in the furnace, the more effective is the furnace at preventing soldering defects. In an inert atmosphere reflow furnace, a device such as a labyrinth has been installed on the exit and entrance so that air will not penetrate from the exterior, or turbulence of hot gas blown inside the furnace has been suppressed so as to prevent penetration of air from the exterior.

In general, in an inert atmosphere reflow furnace, inert gas is introduced into the furnace from a gas cylinder or an inert gas generating apparatus or the like disposed on the exterior of the furnace, but if new inert gas is constantly introduced, a large amount of inert gas is consumed, and running costs become high. Therefore, inert gas in a furnace is cleaned and reused. Cleaning of inert gas involves removing solvent vapors and flux fumes produced by solder paste at the time of soldering.

When a solder paste is heated in a reflow furnace, solvents in the solder paste vaporize in the preheating zone, and the flux is heated to a high temperature in the main heating zone, so the flux breaks down and becomes flux fumes. If solvents and flux fumes (collectively referred to below as flux fumes) which evaporate in this manner adhere to structural portions inside a reflow furnace, they condense on these portions and harden. If flux fumes which have hardened accumulate over a long period, they drip onto printed circuit boards at the time of soldering and contaminate the expensive printed circuit boards or SMD's, or they interfere with the smooth operation of a conveyor. Therefore, in the past, there were many proposals of reflow furnaces equipped with a flux fumes removal apparatus (See Patent Documents 1 - 8).
Patent Document 1: JP H1-305594 A
Patent Document 2: JP H4-13474 A
Patent Document 3: JP H4-46667 A
Patent Document 4: JP H4-251661 A
Patent Document 5: JP H5-50218 A
Patent Document 6: JP H9-307224 A
Patent Document 7: JP H10-335807 A
Patent Document 8: Japanese Published Unexamined Utility Model Application H5-93079

### Disclosure of the Invention

### Problem Which the Invention is to Solve

In a reflow furnace equipped with a conventional flux fumes removal apparatus, there is insufficient suction for sending flux fumes to the removal apparatus. In addition, when inert gas which was cleaned by the removal apparatus is returned to the inside of the furnace, there is sometimes entry of outside air into the furnace. This invention provides a reflow furnace which not only efficiently carries out suction of flux fumes which are formed inside the furnace. This invention also provides a reflow furnace which does not experience influx of outside air into the furnace when inert gas which was cleaned in the removal apparatus is returned to the furnace.

### Means for Solving the Problem

The present inventors perceived that when smoke is exhausted, it can be efficiently exhausted if a suction portion is provided in the vicinity of the origin of the smoke, and that the flow of air can be prevented by providing an air curtain at an entry and exit, and they thereby completed the present invention.

The present invention is a reflow furnace in which flux fumes which are formed inside a reflow furnace are led by a pipe to the exterior of the reflow furnace together with an inert gas, and after flux fumes are removed by a flux fumes removal apparatus installed on the exterior of the reflow furnace, the inert gas is again returned to the interior of the reflow furnace, characterized in that a suction pipe for flux fumes is provided along a rail for a conveyor at least over the entirety of a heating zone, a plurality of suction ports are formed in the inner side of the suction pipe, the suction pipe is connected to an inlet of the flux fumes removal apparatus on the exterior of the reflow furnace by an outflow pipe, blowoff nozzles are installed above and below the entrance and exit of the reflow furnace, and the blowoff nozzles are connected to the outlet of the removal apparatus.

### Effects of the Invention

In a reflow furnace according to the present invention, flux fumes which are formed in the furnace can be efficiently transported to the outside of the furnace and cleaned. The flux fumes therefor do not adhere to the furnace walls or the conveyor, and the problem of solidified flux fumes falling down does not occur. In addition, because a reflow furnace according to the present invention introduces cleaned inert gas into the furnace at the entrance and exit, the inert gas becomes an air curtain at the entrance and exit, inflow of air from outside the furnace is prevented, and the concentration of oxygen inside the furnace can be prevented from increasing.

### Best Mode for Carrying Out the Invention

When a printed circuit board is heated inside a furnace, flux fumes are formed by the solder paste which was applied to the printed circuit board. A suction port for flux fumes is preferably placed as close as possible to the printed circuit board. In the present invention, suction ports for flux fumes are placed in the vicinity of a conveyor and preferably above a rail of the conveyor. Openings are formed in suitable locations of a long rectangular pipe as the suction ports, and the pipe is installed above the rail.

A suction pipe for sucking flux fumes needs to extend over the entire heating zone, i.e., over the preheating zone and the main heating zone. In the preheating zone, solvent evaporates from solder paste, and in the main heating zone, flux vaporizes. It is necessary therefor to suck these vapors and fumes with a first priority. However, if the suction pipe extends to the cooling zone, it is further effective at sucking flux fumes inside the furnace. This is because flux fumes which are formed in the main heating zone are sometimes carried over to the cooling zone, so if suction of these flux fumes is carried out, nearly all the fumes inside the furnace can be sucked out.

### Embodiments

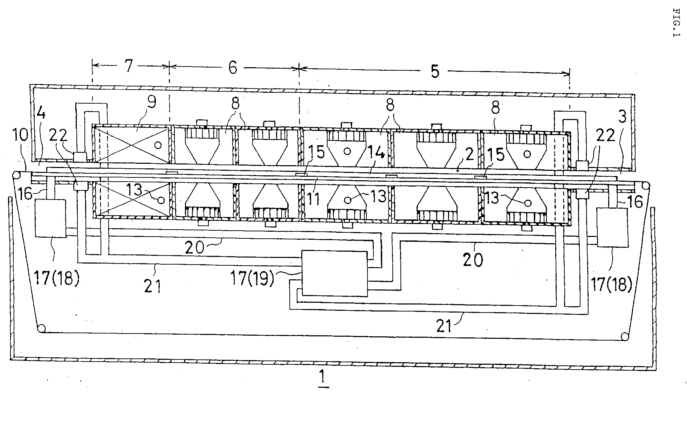

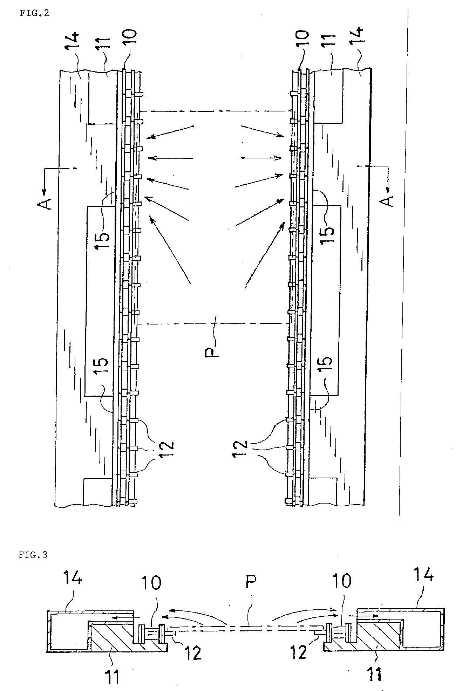

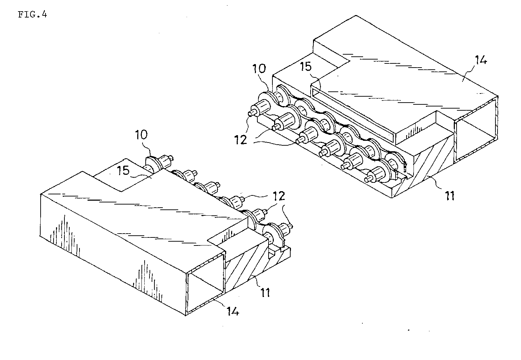

The present invention will be explained based on the drawings. Figure 1 is a front cross-sectional view of a reflow furnace according to the present invention, Figure 2 is a plan cross-sectional view of a conveyor, Figure 3 is a cross-sectional view taken along line A-A of Figure 2, and Figure 4 is an enlarged perspective view of principal portions.

The reflow furnace 1 has a tunnel 2 formed in its lengthwise direction. The inside of the tunnel is formed into a preheating zone 5, a main heating zone 6, and a cooling zone 7 which are arranged in series from an entrance 3 towards an exit 4. Heaters 8 of the type which blow hot air are installed in the upper and lower portions of the preheating zone 5 and the main heating zone 6. Cooling mechanisms 9, 9 are installed in the upper and lower portions of the cooling zone 5.

A pair of conveyors 10, 10 runs inside the tunnel 2 from the entrance 3 towards the exit 4. The conveyors 10 travel atop rails 11. A large number of pins 12 which extend toward each other project from the pairs of conveyors 10, 10, and a printed circuit board P is disposed atop the pins and is transported inside the tunnel 2.

Inert gas supply ports 13 are installed in suitable locations inside the heaters 8 for blowing hot air. The inert gas supply ports are connected to an unillustrated inert gas supply such as a nitrogen gas cylinder or a nitrogen gas tank on the outside of the reflow furnace.

Rectangular suction pipes 14 are installed along the rails 11 of the conveyors. A plurality of suction ports 15 are formed on the inner sides of the suction pipes, i.e., on the sides facing a printed circuit board being transported. The length of the suction pipes 14 needs to be such that they extend to at least the preheating zone 5 and the main heating zone 6 which are the portions where a printed circuit board is actually heated, but they may extend to the cooling zone. Outflow pipes 16, 16 are connected to both ends of the suction pipes 14 and to a removal apparatus 17 which removes flux fumes.

The flux fumes removal apparatus 17 comprises filter portions 18 and an aggregating portion 19. The filter portions 18 and the aggregating portion 19 are connected by removal pipes 20. A filter is installed inside each filter portion 18. Most of the flux fumes which are sucked by the suction pipes 14 are adsorbed by the filters and removed. The aggregating portion 19 is equipped with a blower, and water-cooled fins are installed in its interior. The blower sucks in gas through the suction pipes 14, the outflow pipes 16, the filter portions 18, and the removal pipes 20, and flux fumes which could not be adsorbed and removed by the filter portions 18 are made to contact the water-cooled fins and are thereby aggregated and adhered to the fins and recovered.

Outflow pipes 21, 21 are connected to outlets of the aggregating portion 19. The outflow pipes are connected to blowoff nozzles 22 installed in the upper and lower portions of the entrance and the exit of the tunnel.

The operating state of a reflow furnace having the above-described structure will be explained. A printed circuit board P is disposed on the conveyors 10 from the entrance 3 and carried into the tunnel 2. The printed circuit board P is heated by the heaters 8 for blowing hot air in the preheating zone 5, solvents in the solder paste are evaporated here, and preheating is carried out in order to protect the printed circuit board and electronic parts against thermal shock. The solvent which is evaporated here is sucked into the suction ports 15 which open in the vicinity of the conveyors 10 as shown by arrows in Figures 2 and 3.

The printed circuit board P which was preheated in the preheating zone 5 is next transported to the main heating zone 6, and here solder powder in the solder paste which is heated to a high temperature melts and spreads and wets the portions to be soldered. At this time, rosin, activators, thixotropic agents, and the like in the solder paste become flux fumes, and the flux fumes are sucked into the suction ports 15 which open in the vicinity of the conveyors 10.

The gasified solvent and flux fumes which are sucked into the suction ports 15 pass from the suction pipes 14 to the outflow pipes 16 and enter the filter portions 18 of the removal apparatus. Although the flux fumes are gases, they are an aggregation of fine particles, so the flux fumes which enter the filter portion adhere to the filter and are almost entirely removed. Flux fumes from which particles could not be completely removed are transferred by the removal pipe 20 to the aggregating portion 19, and here they contact the water-cooled fins and aggregate and are completely removed. The filters to which a large amount of flux fumes has adhered are removed from the filter portions and discarded or incinerated, and the flux fumes which adhere to the water-cooled fins in the aggregating portion are recovered in a vessel at the bottom portion and disposed of as industrial waste.

### Brief Description of the Drawings

Figure 1 - This is a front cross-sectional view of a reflow furnace of the present invention.
Figure 2 - This is a plan cross-sectional view of a conveying apparatus.
Figure 3 - This is a cross-sectional view taken along line A - A of Figure 2.
Figure 4 - This is an enlarged perspective view of principal portions.

### Explanation of Symbols

- 1: reflow furnace
- 2: tunnel
- 3: entrance
- 4: exit
- 5: preheating zone
- 6: main heating zone
- 7: cooling zone
- 8: heater blowing hot air
- 9: cooler
- 10: conveyor
- 11: rail
- 14: suction pipe
- 15: suction port
- 17: removal apparatus
- 18: filter portion
- 19: aggregating portion

### Industrial Applicability

A reflow furnace according to the present invention is suitable for use as an inert atmosphere reflow furnace, but it can of course be used as an air reflow furnace not using an inert gas. Flux fumes are also formed in an air reflow furnace, but by cleaning hot air inside the furnace in a removal apparatus on the exterior of the furnace and then circulating it to the reflow furnace, warmed air can be reused, resulting in conservation of resources.

## Claims

1. A reflow furnace in which flux fumes which are formed inside the reflow furnace are led together with an inert gas to the outside of the reflow furnace through a pipe, the flux fumes are removed by a flux fumes removal apparatus installed on the exterior of the reflow furnace, and then the inert gas is again returned to the interior of the reflow furnace, **characterized in that** a suction pipe for flux fumes is provided along a conveyor rail at least over the entirety of a heating zone, a plurality of suction ports are formed on an inner side of the suction pipe, the suction pipe is connected by an outflow pipe to an inlet of the flux fumes removal apparatus on the exterior of the reflow furnace, blowoff nozzles are provided in the upper and lower portions of an entrance and exit of the reflow furnace, and the blowoff nozzles are connected to an outflow port of the removal apparatus.
